# EUROPEAN PATENT APPLICATION

(11) **EP 4 835 246 A1**
(43) Date of publication of application: **04.11.2026**
(21) Application number: 25173255.8
(22) Date of filing: 29.04.2025
(51) Int. Cl.: E06B 3/56, E04D 13/03, E06B 3/66

(54) **BUILDING WINDOW WITH VACUUM INSULATED GLASS UNIT AND WEATHER SEALANT**

(71) Applicant: VKR Holding A/S, 2970 Hørsholm (DK)
(72) Inventor: Silbermann, Victor, 2970 Hørsholm (DK); Blichfeldt, Asbjørn Skyum, 2970 Hørsholm (DK); Skov, Rasmus Fogelberg, 2970 Hørsholm (DK)
(74) Representative: Høiberg P/S

(57) **Abstract**

The present disclosure relates to a building window. The building window comprises a structural window frame (10) and a vacuum insulated glass (VIG) unit (2). The vacuum insulated glass unit (2) is attached (7, 8, 9) to the structural window frame (10).

The window frame (10) comprises one or more elongated holding profiles (7) comprising an attachment part (7a) which overlaps a first exterior major surface (SU1) of the vacuum insulated glass unit (2). A weather sealant material (8) is attached to the attachment part (7a) and said first exterior major surface (SU1) of the vacuum insulated glass unit (2). The weather sealant is a silicone reactive hot-melt sealant material. The first exterior major surface (SU1) comprises a coating (18) comprising a photocatalytic element.

## Description

The present disclosure relates to a building window comprising a vacuum insulated glass unit.

### Background

A vacuum insulated glass (VIG) units provides improved heat insulation performance, e.g. when compared to the amount of material used. Hence, VIG units are relevant for use in building windows. A vacuum insulated glass unit comprises glass sheets and an evacuated gap arranged between major surfaces of the glass sheets. A plurality of support structures are distributed in the evacuated gap so as to maintain a distance between the major surfaces, and an edge seal, such as a rigid edge seal, may enclose the evacuated gap.

The edge seal may cause stress in the VIG unit when a temperature difference between the glass sheets occurs. Examples of thermal edge deflections in VIG units for a building window are e.g. described in patent documents WO20147906 and WO20147902. Patent document WO22189124 discloses another building window solution comprising a VIG unit.

The present inventors have found that issues may occur when implementing VIG units in building windows such as roof windows. These issues may directly or indirectly cause reduction of the estimated lifetime of the window and/or VIG unit. Additionally or alternatively, drawbacks in relation to weather sealing, aesthetical appearance and/or limitations in window design may occur. Also the usage range of the window may be limited.

It may e.g. be an object of the present disclosure to provide a building window comprising a VIG unit which reduces one or more of the above mentioned issues. It may for example be an object of the present disclosure to provide a building window comprising a VIG unit that may be used in a larger variety of ambient conditions without compromising the estimated lifetime and/or integrity of the building window. It may additionally or alternatively be an object of the present disclosure to provide a building window comprising a VIG unit that may provide improved weather tightness such as improved water tightness. It may also be an object of the present disclosure to provide a solution enabling improved aesthetics of a building window comprising a VIG unit over the estimated lifetime of the building window.

### Summary

The present disclosure, according to a first aspect, relates to a building window, such as a roof window. The building window comprises a structural window frame comprising elongated structural frame profiles, and a vacuum insulated glass (VIG) unit. The VIG unit comprises a first glass sheet and a second glass sheet. The VIG unit moreover comprises an evacuated gap arranged between a major surface of the first glass sheet and a major surface of the second glass sheet. A plurality of support structures are arranged in the evacuated gap, and a rigid edge seal encloses the evacuated gap. The VIG unit is attached to the structural window frame, such as a movable frame. The window frame comprises one or more elongated holding profiles comprising an attachment part which overlaps a first exterior major surface of the vacuum insulated glass unit. A weather sealant material is attached to the attachment part and to said first exterior major surface of the vacuum insulated glass unit. The first exterior major surface is configured to face away from the interior of the building when the building window is installed in a building. The weather sealant material is a water tightening weather seal. The weather sealant material is a silicone reactive hot-melt sealant material, and the first exterior major surface comprises a coating. Said coating comprises a photocatalytic element.

A photocatalytic coating is activated by sunlight and enhances the glass cleaning during rain. It has been found that VIG glass may e.g. have residues from production and the photocatalytic coating may help remove such residues and/or generally clean the VIG unit surface better.

Further the inventors have surprisingly found that other, often softer, weather sealant materials that may normally be used in building windows, such as roof windows may not provide a sufficiently lasting weather sealing solution, as the thermal deflections of the VIG unit edges may cause deformation, such as compression and/or stretching, of such sealant material. An example of such a sealant material is butyl. For example, the inventors found that e.g. butyl may as such be compatible for use together with a coating comprising a photocatalytic element. However, the inventors have also found that a weather sealant comprising or being e.g. butyl may be damaged by the varying thermal deflections of the VIG unit edges over time, and as a result thereof the weather resistance such as water tightness may reduce over time. Butyl weather sealants may maintain in a rubbery, sticky, uncured state during the live span of a building window, which may make it suitable for use with insulated glass units with gas filled gaps. Such insulated glass units are however not subjected to the magnitudes of thermal deflections which may occur at VIG units having rigid edge seals. The present inventors have accordingly found that e.g. butyl may be less desirable as a weather sealant between a window frame arrangement and a VIG unit surface due to the thermal deflections of a VIG unit.

Moreover, the present inventors have found that some other weather sealant materials, such as some silicone materials, may be disadvantageous to use in contact with a coating comprising a photocatalytic element, such as a titanium dioxide (*TiO*₂) coating. Components, such as oil or gases, of such sealant materials may over time be released from sealant materials and react with the coating. This may damage the coating and/or provide a solution that is less aesthetically desirable as it may cause color changes, such as discoloration, at the photocatalytic coating. It may also cause a hydrophobic area at the VIG unit surface.

The present inventors have however discovered that a silicone reactive hot-melt sealant material may be suitable for use in combination with a coating comprising a photocatalytic element, such as a titanium dioxide (*TiO*₂) and that some of the above mentioned drawbacks may thus be reduced or avoided.

Also, the inventors found that a silicone reactive hot-melt sealant when used as a weather sealant of a building window, such as a roof window, is able to cope the varying edge deflections of VIG units during the estimated lifetime of a building window, and may help to reduce stress in the VIG unit. The inventors found that even though some silicone reactive hot-melt sealants have a relatively high rated (according to data sheet) e-modulus value at higher deformation speeds, the thermal deflections of a VIG unit during normal use in a window occur at a lower speed, and the e-modulus of some hot-melt sealants may here be significantly lower which may help to reduce unwanted stress conditions in the VIG unit.

The weather sealant material is configured to provide water tightening so as to prevent or reduce water entering in between the attachment part and the weather sealant material and in between the VIG unit and the weather sealant material. The weather sealant material may be arranged along and parallel to the sides and/or top of the roof window. The weather sealant material may or may not be arranged along and parallel to bottom of the roof window.

The rigid edge seal may comprise or be a solder material edge seal such as a solder glass edge seal or a metal solder edge seal.

In one or more embodiments of the present disclosure, the coating is in contact with the weather sealant material.

In one or more embodiments of the present disclosure, the coating comprises or is a coating stack comprising a plurality of stacked coating layers.

In one or more embodiments of the present disclosure, a coating layer of the coating comprises said photocatalytic element, wherein said coating layer comprising said photocatalytic element is in contact with the weather sealant material.

In one or more embodiments of the present disclosure, said coating, such as said coating layer, comprising the photocatalytic element comprises a titanium dioxide (*TiO*₂) coating. Such a coating based on titanium dioxide provides a self-cleaning surface. The titanium dioxide coating on the glass unit may react with UV light to break down and/or reduce organic substance into tiny pieces which rainwater may help to wash away.

In one or more embodiments of the present disclosure, the coating comprises an anti-dew coating, such as a low-E coating, such as comprising an indium tin oxide (ITO) coating.

In one or more embodiments of the present disclosure, said coating comprises or is a multilayer coating comprising at least a first coating and a second coating. The first coating may comprise a low-E coating layer, such as comprising an indium tin oxide (ITO) coating,
wherein the second coating is a coating comprising a photocatalytic element, such as a titanium dioxide (*TiO*₂) coating.

A coating comprising a low-E element such as ITO provides an anti-dew effect. This has shown to be advantageous in building windows such as building roof windows, since the thermal insulation performance of VIG units is good. Real life tests where a roof window with a VIG unit was installed in a building have however shown that formation of dew on the exterior major surface of the VIG unit may maintain for a longer time. This is from the perspective of a human user is less desirable as it may block or reduce the view through the VIG unit.

A coating comprising the Low-E element may result in a reduced amount of dew at the exterior major surface of the VIG unit. A human user may thus get a better view through the VIG unit over a longer period of the day under climatic conditions where dew would otherwise have formed at the VIG unit surface for a longer time if the coating was omitted.

In some further embodiments hereof, the first coating is placed between the VIG unit glass sheet surface and the second coating.

In some embodiments, the coating comprises a coating layer stack, and one or more coating layers of the coating layer stack may be arranged between the first and second coating layers.

In some embodiments, the first coating layer and the second coating layer may be adjacent coating layers.

It is understood that the coating is arranged at the exterior major surface of a glass sheet of the VIG unit to cover that surface and that the coating thus provides the exterior major surface of the VIG unit.

In one or more embodiments of the present disclosure, the elastic modulus (E-modulus) of the weather sealant material may be below 0.6 MPa, such as below 0.4 MPa, such as below 0.3 MPa, which elastic modulus of the weather sealant material (8) is an elastic modulus (E-modulus) determined at 100% elongation at 23°C and at a speed of 1 ± 0.2 mm/min.

Said elastic modulus (E-modulus) of the weather sealant material may be determined according to the ASTM D412 standard. ASTM D412 defines Standard Test Methods for e.g. elastomers. It is understood that the ASTM D412 may be the standard as updated in 2021.

The test may be provided by means of identifying the seal material type at a window, and obtain a sample of corresponding seal material suitable for test at a test facility complying with ASTM D412.

The present inventors found that the softness of the weather sealant material may play a relevant role in obtaining a weather resistant and long-lasting building window with a VIG unit. The VIG unit may after window installation in a building be subjected to shifting thermal edge deflections caused by a temperature difference between the first and second glass sheet due to the rigid edge seal. It has been approved by both real-life tests and computer simulations that such thermal edge deflections causes a bending curve extending between the VIG unit corners, and that the magnitude of such thermal edge deflection may vary e.g. dependent on VIG unit size and the magnitude (and operational sign) of the temperature difference between the glass sheets. For example, longer VIG unit edges may cause larger edge deflections. The inventors have realized that such thermal edge deflection of a VIG unit caused by glass sheet temperature differences during normal window use however occur at a relatively slow speed. The inventors found that using a weather sealant materials having a relatively low E-modulus at low deformation speeds would be acceptable, and may thus be advantageous to use in a building window with a VIG unit as an exterior weather sealant material. Such a weather sealant material may be able to follow the thermal edge deflections of the VIG unit when the temperature difference between the glass sheets varies, which may provide weather tightness while reducing stress buildup in the VIG unit.

Tests have indicated that a too high E-modulus value of the weather sealant material may cause or contribute to undesired stress conditions in the VIG unit when thermal edge deflections occur.

In one or more embodiments of the present disclosure, the elastic modulus (E-modulus) of the weather sealant material is higher, such as at least 1.5 times higher, such as at least 2 times higher, such as at least 5 times % higher at 50% elongation at 23°C and at a higher testing speed of 500 ± 0.2 mm/min.

In one or more embodiments of the present disclosure, the elastic modulus (E-modulus) of the sealant material is higher at 23°C and at a higher testing speed of 500 ± 0.2 mm/min. In some embodiments, this may apply at least at 50% or 100% elongation.

In one or more embodiments of the present disclosure, the elastic modulus (E-modulus) of the sealant material (8) is above 0.6 MPa, such as above 0.7 MPa, such as above 1.1 MPa when tested according to standard ASTM D412 at 23°C and at a higher testing speed of 500 ± 0.2 mm/min. This may e.g. be the case at 100% elongation.

In one or more embodiments of the present disclosure, the elastic modulus (E-modulus) of the weather sealant material is above 0.7 MPa, such as above 0.8 MPa, such as above 1 MPa when tested according to standard ASTM D412 at 50% elongation at 23°C and at a higher testing speed of 500 ± 0.2 mm/min.

The inventors realized that conventional tests according to the standard ASTM D412, unless otherwise specified, are provided at a speed of 500 mm/min. The inventors also realized that thermal edge deflection caused by glass sheet temperature differences during normal window use occur at a significantly lower speed than 500 mm/min. The Inventors have found that some available sealant materials, such as silicone sealant materials, such as a silicone hot-melt sealant material, have the properties of having a significantly lower E-modulus at slow deformation speed when compared to a higher deformation speed at 500 mm/min. A sealant material with lower E-modulus at lower deformation speeds provides the advantage of advantageous adaption to the movement of the VIG unit caused by the thermal deflection at the VIG unit edge. The weather sealant material may hence adapt to these shifting temperature conditions by being reduced in thickness and stretched due to the thermal edge deflection of the VIG unit so as to follow VIG unit movement and maintain water tightness when the temperature difference between the VIG unit glass sheets varies.

The inventors found that a sealant that was generally rated to have a higher E-modulus at higher deformation speeds in a data sheet, such as e.g. 500 mm/min, and are substantially softer at lower deformation speeds, may be advantageous to use at the exterior side of building windows as weather seal between a frame part and a VIG unit, as the sealant material may at least partly adapt to the thermal edge deflection of the VIG unit and help to reduce stress conditions in the VIG.

Additionally, the property of the sealant being harder at higher deformation speeds may provide advantages in relation to e.g. transferring forces from sudden high-speed impacts to the frame.

In one or more embodiments of the present disclosure, the elastic modulus is the elastic modulus of the sealant material and/or adhesive at a material thickness of 4 mm or 6 mm.

In one or more embodiments of the present disclosure, the thickness of the weather sealant material is at least 3 mm, such as at least 4 mm, such as at least 5 mm when the temperature difference ΔT between the first and second glass sheets is substantially 0°C

In one or more embodiments of the present disclosure, the thickness of the weather sealant material is between 3 mm and 12 mm, such as between 3 mm and 7 mm, such as between 4 mm and 7 mm including endpoints when the temperature difference ΔT between the first and second glass sheets is substantially 0°C.

Such thickness may provide sufficient adaption to the thermal deflections of the VIG unit and/or help to reduce unwanted stress conditions in the VIG unit. Additionally it may provide that wear on the sealant material is reduced.

In one or more embodiments of the present disclosure, an adhesive is arranged between a second exterior surface of the vacuum insulated glass unit and the structural window frame so as to attach the vacuum insulated glass unit to the structural window frame. Said first and second exterior surfaces faces away from each other.

The adhesive may provide sufficient attachment of the VIG unit. It may also provide an aesthetically pleasing and/or safe solution and/or be provided so as to reduce stress conditions in the VIG unit.

The first and second exterior surfaces may be part of a major surface of a glass sheet of the VIG unit.

In one or more embodiments of the present disclosure, said adhesive is a structural adhesive.

In some embodiments of the present disclosure, the weather sealant material is softer than the adhesive. This softness may e.g. be

In one or more embodiments of the present disclosure, the sealant material may be at least 200% softer, such as at least 400% softer, than the adhesive.

The softness of the weather sealant material and/or the adhesive may be a softness, such as the elastic modulus (E-modulus), at low/slow deformation speeds, such as at deformations speeds of 1 ± 0.2 mm/min and at 23°C.

It is generally understood that according to embodiments of the present disclosure, said softness of the weather sealant material and e.g. also of the adhesive may be determined according to the ASTM D412 standard.

In one or more embodiments of the present disclosure, the weather sealant material and the structural adhesive are arranged opposite to each other at each side of the vacuum insulated glass unit.

In one or more embodiments of the present disclosure, the thickness of the adhesive is at least 3 mm, such as at least 4 mm, such as at least 5 mm when the temperature difference ΔT between the first and second glass sheets is substantially 0°C. Additionally ort alternatively, in one or more embodiments of the present disclosure, the thickness of the adhesive is between 3 mm and 12 mm, such as between 3 mm and 8 mm, such as between 4 mm and 7 mm including endpoints when the temperature difference ΔT between the first and second glass sheets is substantially 0°C.

Such thickness may help to reduce unwanted stress conditions in the VIG unit. Additionally it may provide that wear on the adhesive is reduced.

In one or more embodiments of the present disclosure, said adhesive is omitted at one or more corner portions, such as at two or more corner portions, such as at all corner portions, of the vacuum insulated glass unit, such as by means of the adhesive being terminated at a distance from the respective corner portion.

In one or more embodiments of the present disclosure, said adhesive is terminated at a distance from an outermost edge surface of the Vacuum Insulated Glass unit, wherein said outermost edge surface has a longitudinal direction which extends substantially perpendicular to a longitudinal direction of the adhesive, such as wherein said distance is at least 20 mm, such as at least 50 mm, such as at least 100 mm.

This may help to reduce restriction of the thermal deflection of the vacuum insulated glass unit when compared to if the adhesive was continued all the way to a position at the VIG unit corner, such as opposite a corner portion of the rigid edge seal material.

In one or more embodiments of the present disclosure, the strip of the adhesive may have a length corresponding to at least 30%, such as at least 60%, such as at least 80% of the length of an edge of the VIG unit that has a longitudinal direction which is substantially parallel to the longitudinal direction of that strip of adhesive and which is proximate to the adhesive strip.

In one or more embodiments of the present disclosure, the strip of the adhesive may have a length that is less than 97%, such as less than 93%, such as less than 88% of the length of an edge of the VIG unit that has a longitudinal direction which is substantially parallel to the longitudinal direction of that strip of adhesive and which is proximate to the adhesive strip.

In one or more embodiments of the present disclosure, the strip of the adhesive may have a length corresponding to between least 30% and 97%, such as between 50% and 93%, such as between 60% and 88% of an edge of the VIG unit that has a longitudinal direction which is substantially parallel to the longitudinal direction of that strip of adhesive and which is proximate to the adhesive strip.

In one or more embodiments of the present disclosure, one or more of the adhesive, the weather sealant material and/or the elongated holding profiles may provide a resistance against the thermal edge deflection of the VIG unit. In some embodiments hereof, the resistance against thermal deflection of at least two opposing edges of said vacuum insulated glass unit may be substantially lower at corner parts of the edges than at center parts of the edges.

In certain embodiments, the adhesive, the weather sealant material and/or the elongated holding profiles provides a VIG unit fixation system for fixating the VIG unit at the window frame.

In some embodiments of the present disclosure, the resistance against thermal deflection of at least two opposing edges of said vacuum insulated glass unit may be substantially lower at corner parts of the edges than at center parts of the edges, whereby the ratio between the compression force on the fixation system and the thermal deflection at positions at the corner parts is less than half of the corresponding ratio at the center part of an edge, Said center parts of said at least two opposing, parallel edges may in some embodiments constitute at least a third, such as half of the extend of the edge between said corners.

In one or more embodiments of the present disclosure, said weather sealant material is configured to provide water tightness at corner portions of the vacuum insulated glass unit.

In one or more embodiments of the present disclosure, said weather seal material overlaps said one or more corner portions so as to provide water tightness at said one or more corner portions at the other side of the vacuum insulated glass unit.

The weather seal material may be configured to provide water tightness along the VIG unit edges and also provide water tightening at corner portions of the Vacuum insulated glass unit. This may e.g. also provide less requirements to the interior side of the VIG unit, and hence, it may be accepted that the adhesive is omitted at the corner portions of the VIG unit and/or is replaced with another, e.g. softer, material at the corner portions of the VIG unit.

In one or more embodiments of the present disclosure, said weather seal material comprises a seal material portion which overlaps a portion, such as a space, such as an unfilled space, which is located between the window frame and the vacuum insulated glass unit, and wherein said overlapped portion is located opposite to one or more end surfaces of the adhesive.

In one or more embodiments of the present disclosure, the weather sealant material extends continuously and substantially parallel to the edge of the vacuum insulated glass unit between corners of the vacuum insulated glass unit,
such as wherein strips of the weather sealant material meet at a weather seal corner.

In one or more embodiments of the present disclosure, the attachment part comprises, such as constitutes, a clamping part which clamps the vacuum insulated glass unit towards the structural window frame.

In one or more embodiments of the present disclosure, the surface of the attachment part which the weather sealant material is attached to is substantially parallel to the first exterior surface of the vacuum insulated glass unit that the weather sealant material is attached to. Experiments have shown that this may provide a good and long lasting weather sealant solution, e.g. also if the weather sealant material is a hot-melt sealant material such as a silicone reactive hot-melt sealant material.

In one or more embodiments of the present disclosure, a first plane comprises the first exterior major surface of the vacuum insulated glass unit when the temperature difference between the first and second glass sheets is substantially 0°C, wherein the attachment part is configured to move towards and/or away from the first plane when said temperature difference ΔT = T1-T2 between the first and second glass sheets varies, such as varies between 0°C to 65°C, such as varies between 0°C to 40°C.

This may e.g. provide that especially at larger temperature differences between the first and second glass sheets, the attachment part moves so as to follow the movement of the VIG unit. This may e.g. help to reduce stress conditions at the VIG unit and/or help to protect the weather sealant material. Hence, e.g. a longer lasting solution may be provided.

Additionally or alternatively, it may provide a space saving and/or cost efficient solution, because the thickness of the weather sealant material may be reduced when compared to if the attachment part maintains unmovable when the temperature difference ΔT between the first and second glass sheets varies between 0°C to 65°C, such as between 0°C to 40°C.

It may also enable a longer lasting sealant solution which may cause the weather sealant material to last in substantially the entire estimated lifetime of the building window, which may be e.g. at least 20 years.

In one or more embodiments of the present disclosure, the surface of the attachment part which the weather sealant material is attached to is substantially parallel to the first exterior surface of the vacuum insulated glass unit that the weather sealant material is attached to.

Experiments have shown that this may provide a good and long lasting weather sealant solution, e.g. also if the weather sealant material is a hot-melt sealant material such as a silicone reactive hot-melt sealant material.

In one or more embodiments of the present disclosure, the holding profile comprises a tip portion, wherein a part of the tip portion is arranged below the level of the top surface of the sealant material,

In one or more embodiments of the present disclosure, said part of the tip portion, such as a surface part of the tip portion, touches the exterior major surface of the vacuum insulated glass unit.

In one or more embodiments of the present disclosure, the tip portion of the holding profile may be moved directly or indirectly by the VIG unit in response to a thermal deflection of the VIG unit.

This may e.g. provide an aesthetically pleasing solution as a visible gap between the holding profile and the VIG unit surface is reduced or even substantially omitted. Also, it may help to hide the weather sealant material. Additionally or alternatively, it may provide a solution which provides improved water tightness and/or protection of the weather sealant material.

In one or more embodiments of the present disclosure, the weather sealant is arranged between the attachment part of the holding part and the VIG unit, and moreover between the tip portion and a profile, such as said reinforcement profile.

In one or more embodiments of the present disclosure, a water drainage space may be arranged between the tip portion and the weather sealant material.

In one or more embodiments of the present disclosure, the building window is a roof window configured to be installed in a roof structure having a roof pitch below 70°, such as below 60°,

In one or more embodiments of the present disclosure, the building window is a roof window configured to be installed in a roof structure having a roof pitch between 5° and 70°, such as between 16° and 70°.

Roof windows are subjected to more extreme water and snow conditions, hails and the like, which may require improved weather tightening. Experiments have shown that a roof window according to embodiments of the present disclosure may be able to provide sufficient weather resistance.

In one or more embodiments of the present disclosure, the building window is a roof window of the center-hung type.

In one or more embodiments of the present disclosure, the building window is a roof window of the of the non-center-hung type.

In one or more embodiments of the present disclosure, the building window is a roof window of both the top hung type and center-hung type.

In one or more embodiments of the present disclosure, at least the glass sheet comprising the coating is a thermally tempered glass sheet.

Thermally tempered glass sheets provide a higher strength, which is especially advantageous in VIG units since a VIG unit is exposed to stress conditions due to the rigid edge seal. Also, thermally tempered glass sheets enables providing a longer distance between adjacent support structures in the evacuated gap.

The present disclosure relates, according to a second aspect, to a building window, such as a roof window, The building window comprises a structural window frame comprising elongated structural frame profiles. Also, the building window comprises a vacuum insulated glass (VIG) unit, The VIG unit comprises a first glass sheet and a second glass sheet. Also, the VIG unit comprises an evacuated gap arranged between a major surface of the first glass sheet and a major surface of the second glass sheet. A plurality of support structures are arranged in the evacuated gap so as to maintain a distance between the major surfaces of the glass sheets facing the evacuated gap, and a rigid edge seal encloses the evacuated gap. The window frame comprises one or more elongated holding profiles comprising an attachment part which overlaps a first exterior surface of the vacuum insulated glass unit. A weather sealant material is attached to the attachment part and said first exterior surface of the vacuum insulated glass unit. The first exterior surface is configured to face away from the interior of the building when the building window is installed in a building. The weather sealant material is a water tightening weather seal. A part of the holding profile, such as a tip portion of the holding part, may touch the exterior major surface of the VIG unit.

This may e.g. further improve weather tightness and/or aesthetical appearance, and/or help to further protect the weather sealant material. It is understood that the holding profile may thus touch the said coating, if present.

In some embodiments of the second aspect, said part of the holding profile in touch with the exterior major surface of the vacuum insulated glass unit may be moved by the vacuum insulated glass (VIG) unit in response to a thermal deflection of the VIG unit. This may e.g. be advantageous in relation to controlling and/or reducing stress conditions in the VIG unit and/or in relation to obtaining improved water tightness at varying temperature conditions.

In some embodiments of the second aspect, said movement of the part of the holding profile in touch with the exterior major surface of the vacuum insulated glass unit may be at least 1 mm, such as at least 2 mm, for example at least 3 mm or at least 5 mm, when the temperature difference between the first and second glass sheets is e.g. 40 °C or 65 °C.

Additionally or alternatively, said part of the holding profile in touch with the exterior major surface of the vacuum insulated glass unit may hide the weather sealant material. This may e.g. protect the weather sealant material and/or improve aesthetics.

It is generally understood, that said part of the holding profile, such as the tip portion, may be arranged between the weather sealant material and the exterior surface area of the VIG unit through which sunlight passes to the building interior.

In some embodiments of the second aspect, said part of the holding profile, such as a part of the tip portion, such as a surface part of the tip portion, may touch the exterior major surface of the vacuum insulated glass unit when the temperature difference between the first and second glass sheets is 0 °C.

In some embodiments of the second aspect, said part of the holding profile, such as a surface part of the tip portion, may touch the exterior major surface of the vacuum insulated glass unit when the temperature difference between the first and second glass sheets is 40 °C or 65 °C. This may vary dependent on the direction of the thermal deflection of the VIG unit.

In some embodiments of the second aspect, said part of the holding profile, such as the tip portion, such as a surface part of the tip portion, may be in touch with the surface of the VIG unit along at least 10%, such as at least 50% or at least 90% of the length of the tip portion (along the longitudinal direction of the holding part) when the temperature difference between the first and second glass sheets is 0 °C and/or when the temperature difference between the first and second glass sheets is 40 °C or 65 °C.

In one or more embodiments of the second aspect, one or more embodiments described above between the introduction of the first aspect and the introduction of the second aspect may be provided in various embodiments of the second aspect.

It is generally understood that in some embodiments of the present disclosure, the length of each of at least two of the edges of the VIG unit, such as the length of all four of the edges of the VIG unit, may each be at least 80 cm, such as at least one meter, such as at least 1.2 or at least 1.5 meter.

It is generally understood that in some embodiments of the present disclosure, the surface area of a major surface of the VIG unit is at least 0.8 m², such as at least 1 m², such as at least 1.5 m².

It is generally understood that in some embodiments of the present disclosure, the VIG unit may be rectangular and comprise two parallel longer edges that are longer than (and perpendicular to) two parallel, shorter edges, of the VIG unit.

### Drawings

The present disclosure will in the following be described in greater detail with reference to the accompanying drawings:
- Fig. 1: is a schematic cross sectional view of a building window according to embodiments of the present disclosure,
- Figs. 2A-2B: are schematic cross sectional views of a building window corner area, according to embodiments of the present disclosure,
- Figs. 3A-3B: are schematic views of a VIG unit, according to embodiments of the present disclosure,
- Fig. 4: is a schematic cross sectional view of a building window where adhesive is omitted at a corner area, according to embodiments of the present disclosure, and
- Fig. 5: is a schematic view of a building windows comprising structural frame profiles enclosing a frame opening, according to embodiments of the present disclosure,
- Fig. 6: is a schematic view of a roof windows of the centre hung type, according to embodiments of the present disclosure.
- Fig. 7: is a schematic cross sectional view of a roof windows of the center hung type, according to further embodiments of the present disclosure.

### Detailed description

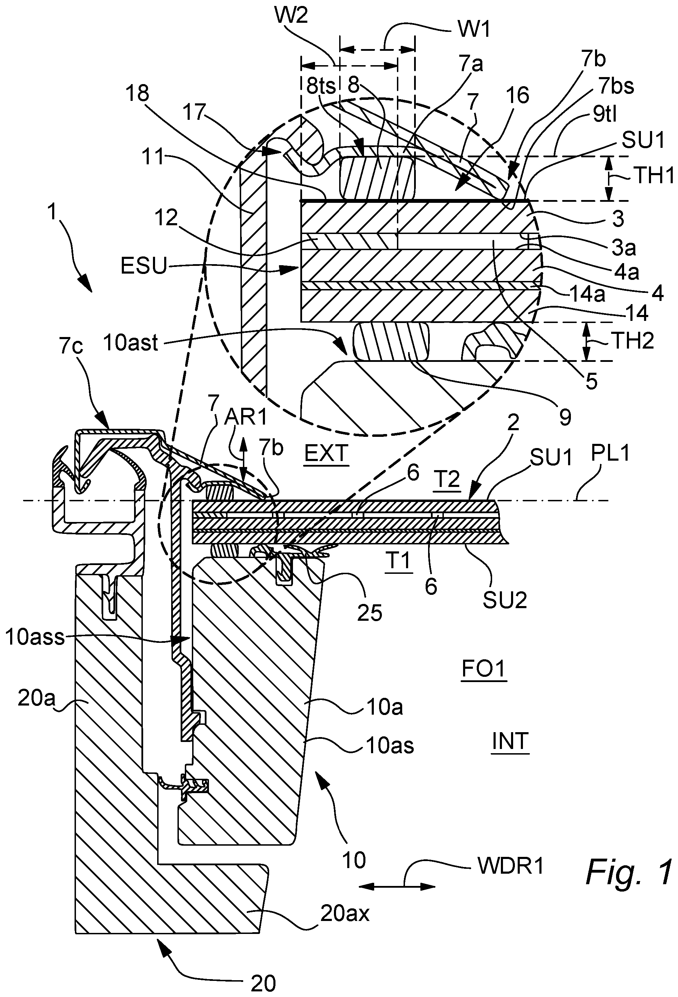

Fig. 1 shows schematically a cross section of a side part of a building window 1 according to embodiments of the present disclosure. In Fig. 1, the building window is a roof window of the top hung type. It is however understood that in other embodiments of the present disclosure, the building window may be a roof window of the centre hung type, a building window of the stationary type (which cannot be opened), or a vertical window, such as a window for installation in an aperture of an exterior, substantially vertical wall of a building.

The building window in fig. 1 comprises a structural window frame 10 comprising elongated structural frame profiles 10a. Just one profile 10a is illustrated, but it is understood that the frame may comprise structural frame profiles for providing and enclosing a rectangular frame opening FO1 through which the sunlight passes. The frame opening FO1 is covered by a vacuum insulated glass (VIG) unit 1.

The vacuum insulated glass (VIG) unit 2 comprising a first glass sheet 3 and a second glass sheet 4. An evacuated gap 5 is arranged between a major surface 3a of the first glass sheet 3 and a major surface 4a of the second glass sheet 4. A plurality of support structures 6 are arranged in the evacuated gap, and a rigid edge seal 12 encloses the evacuated gap 5.

The distance between neighboring support structures 6 may in embodiments of the present disclosure be between 20 mm and 70 mm, such as between 25 mm and 65 mm, such as between 35 mm and 45 mm. The support structures 6 may e.g. be made from a metal such as iron or steel, they 6 may be made from a ceramic or another suitable material. The support structures may be made from a single material, such as steel, or comprise a combination of different materials.

In embodiments of the present disclosure, the pressure in the gap 5 may be below 0.05 mbar, such as below 0.005 mbar, such as below 0.003 mbar or 0.001 mbar or below. This may be obtained by means of an evacuation pump (not illustrated in fig. 1), and the gap is then subsequently sealed to maintain said reduced pressure.

The VIG unit may in some embodiments have a center-of-glass U-value below 0.6. W/m2K.

In one or more embodiments of the present disclosure, one or both glass sheets 3, 4 may have a thickness between 1 mm and 6 mm, such as between 2 mm and 4 mm, for example between 2.5 mm and 3.5 mm including both end points. The glass sheets 3, 4 may have substantially the same thickness. In other embodiments, the glass sheets may have different thickness.

In some embodiments of the present disclosure, the distance between the major glass sheet surfaces 3a, 4a facing the gap 5 of the vacuum insulated glass unit 1 may be below 0.6 mm, such as below 0.4 mm, such as below 0.3 mm or substantially 0.2 mm or below.

The distance between the major glass sheet surfaces 3a, 4a facing and abutting the evacuated gap 5 of the vacuum insulated glass unit 1 may be between 0.05 mm and 0.6 mm, such as between 0.1 mm and 0.4 mm, such as between 0.15 and 0.25 mm. In certain embodiments, the distance between the major glass sheet surfaces 3a, 4a facing the gap 5 of the vacuum insulated glass unit 1 may be between 0.05 mm and 0.4 mm, such as between 0.05 mm and 0.25 mm. The distance may be determined in a direction perpendicular to the surfaces 3a, 4a.

The rigid edge seal 12 may in some embodiments of the present disclosure comprise or be a solder material edge seal such as a solder glass edge seal, such as a low temperature solder glass edge seal, or it may be a metal solder edge seal.

In some embodiments of the present disclosure, one or both glass sheets 3, 4 may be tempered glass sheets, such as thermally tempered glass sheets. In other embodiments, one or both glass sheets 3, 4 may be untampered/annealed glass sheets.

The VIG unit 1 of fig. 1 is a laminated VIG unit. Hence, the VIG unit 1 comprises a lamination interlayer 14a arranged between the inner VIG unit glass sheet 3 and a further lamination glass 14. This may e.g. improve safety. The lamination interlayer 14 may e.g. comprise a PVB (Polyvinyl butyral ) interlayer material or an EVA (ethylenevinyl acetate) interlayer material. The lamination interlayer 14a may or may not be of the sound dampening type. The lamination interlayer of the sound dampening type may comprise a plurality of polymer layers abutting each other, where an intermediate polymer layer of the lamination interlayer has a different, such as lower, glass transition temperature than the neighboring layers of the lamination interlayer. The VIG unit 3 may be laminated only at one side or at both sides of the VIG unit. The lamination glass 14 may or may not be thermally tempered.

In other embodiments of the present disclosure, the VIG unit may be un-laminated. It may be acceptable to use a un-laminated VIG unit in case the window 1 is for installation in a building wall and where the exterior surfaces SU1, SU2 are maintained vertical after installation when the window is in a closed position.

In fig. 1, the VIG unit comprises just one heat insulating gap 5 which is the evacuated gap 5 being the only insulating gap between major surfaces 3a, 4a of adjacent glass sheets 3, 4 of the VIG unit 2. It is generally understood that in other embodiments of the present disclosure (not illustrated), the VIG unit may comprise more than one insulating gap, such as two or three insulating gaps, which are separated from each other by means of an intermediate glass sheet. In certain embodiments hereof, the VIG unit may be of the hybrid type, and comprise both the evacuated gap 5 and a further insulating gap, such as a gas filled gap, such as a gap filled with Argon. The gas filled gap and the evacuated gap are in such embodiments separated by an intermediate glass sheet.

The VIG unit 2 comprises an outermost edge surface ESU that is longitudinal and also extends between the exterior surfaces SU1, SU2. The height of the edge surface ESU extends between the oppositely directed exterior major surfaces SU1, SU2 of the VIG unit, and in a direction that is perpendicular to one of said major surfaces when the temperature difference between the glass sheets is substantially 0 °C. The height of the edge surface ESU may this correspond substantially to the overall VIG unit 2 thickness.

The VIG unit 2 comprises a first major exterior surface SU1 and a second exterior major surface SU2. These surfaces SU1, SU2 faces away from each other and are exterior in the sense that they are the outermost major surfaces of the VIG unit. In fig. 1 the glass sheet 3 comprises the first major exterior surface SU1, and the laminated glass sheet comprises the second major exterior surface SU2.

The second major exterior surface SU2 is configured to face inwards towards the building interior INT when the window is closed position and the window 1 is installed in a building as intended.

The first major exterior surface SU1 is configured to face outwards towards the exterior EXT of the building, i.e. face away from the building interior INT when the window 1 is closed position (if it can be opened) and the window is installed in a building as intended.

In fig. 1, the movable frame 10 is configured to move relative to a fixation frame 20 of the window 1, and may be attached to the fixation frame 20 by means of a hinge connection (not illustrated in fig. 1)
The elongated structural frame profiles 10a of the movable frame and/or the elongated structural frame profiles 20a of the fixation frame may e.g. comprise wood, it may be a hollow (not illustrated), extruded polymer profiles such as PVC profiles, it may be a fiber reinforced, such as glass fiber reinforced polymer profile and/or the like.

In fig. 1, the window 1 is a top hung roof window of the non-center hung type, since a part 20ax of the elongated fixation frame 20 profile precents the roof window from moving through the frame opening of the fixation frame in a center-hung configuration.

The movable frame 10 of fig. 1 comprises a holding profiles 7 (one is illustrated as fig 1 illustrates a cross section of a side frame profile of the window). The holding profile 7 comprises an attachment part 7a which overlaps a first exterior surface SU1 of the VIG unit 2, in this case the major surface SU1 of the glass sheet 3a.

The window frame 10 may also comprise a reinforcement profile 11, such as an elongated reinforcement profile extending parallel to the longitudinal direction of the structural frame profile 10a. The holding profile 7 is fixed to and/or held by the reinforcement profile 11, and the reinforcement profile is attached to an elongated structural frame profile 10a of the window frame. The holding profile 7 is in fig. 1 fixed to and/or held by the reinforcement profile 11 by means of a mechanical fastening arrangement such as a snap connection 17. In other embodiments, other fastening between holding profile 7 and reinforcement profile 11 may be used in addition to or as an alternative to the snap connection. For example an adhesive such as glue, one or more mechanical fasteners such as hook(s), pop rivet(s) and/or screw(s) may be used.

In still further embodiments of the present disclosure (not illustrated), the same, unitary profile may comprise the reinforcement profile 11 and the holding profile, i.e. these 7, 11 may be in one piece, such as a unitary profile.

The reinforcement profile 11 extends over and overlaps the full height of the edge surface ESU of the VIG unit (such as overlaps the full thickness of the VIG unit), and is attached to the structural frame profile 10a, e.g. by means of one or more mechanical fasteners (not illustrated) such as one or more screws, pop rivets, by means of a snap connection and/or the like. It is understood that a combination of such fastening means may be used, or that a single fastening means type may be used for attaching the reinforcement profile 11 to the structural frame profile 10a. This attachment of the reinforcement profile to the structural frame profile 10a is provided at the side of the structural frame profile 10a that faces away from the frame opening FO1, and the reinforcement profile thus overlaps this side surface 10ass. As can be seen in fig. 1, The side surface 10ass faces away from the frame opening FO1 and faces towards a body part of a frame profile 20a of the fixation frame 20, and the reinforcement profile is arranged between the structural frame profile 10a of the movable frame 10 and the frame profile 20a of the fixation frame 20.

It is generally understood that the fixation frame 20 is configured to be attached to a roof structure of a building, or to a wall, dependent on the window 1 type.

The elongated holding profile 7 comprising the attachment part 7a may comprise or consist of a metal, such as a metal plate or sheet, such as a steel or aluminum sheet, for example a bended metal sheet. The holding profile may comprise a painted surface, e.g. be painted in a desired color, or in other ways be provided with a colored surface in a color different from the color of the structural material of the holding profile.

The reinforcement profile 11 may e.g. be a metal profile such as a steel or aluminum profile. The entire surface of the reinforcement profile may be maintained in the color of the structural material of the reinforcement profile, or at least a part of the surface may be colored, such as painted.

The reinforcement profile 11 may be configured so as to substantially not deform elastically when the VIG unit thermally deflects (thermal deflection if VIG unit is explained in more details below), whereas one or more parts of the holding profile 7 may elastically deform and adapt as a consequence of the thermal edge deflection of the VIG unit edges.

In some embodiments of the present disclosure, however, the reinforcement profile may deform elastically when the VIG unit thermally deflects, but the magnitude of this deflection may be significantly lower, such as at least 50% lower, such as at least 100% lower, than the magnitude of an elastic deformation of one or more parts of the holding profile as a consequence of the thermal edge deflection of the VIG unit edges.

In some embodiments of the present disclosure, the material thickness of the holding profile 7 may be lower, such as at least 10% lower, such as at least 25% or at least 35% lower than the material thickness of the reinforcement profile 11.

A weather sealant material 8 is attached to the attachment part 7a and the first exterior surface SU1, preferably the exterior major surface, of the vacuum insulated glass unit. The weather sealant material 8 is a water tightening weather seal.

The weather sealant material 8 may be a silicone reactive hot-melt sealant material. Tests indicates that such a material may provide an advantageous and long-lasting external weather seal at a VIG unit as such materials may be resistant to thermal deflection of the VIG unit 2 edges.

The weather sealant material adheres to the attachment part 7a and to the exterior major surface SU2 of the VIG unit 2.

In some embodiments of the present disclosure, the thickness TH1 of the weather sealant material 8 is at least 3 mm, such as at least 4 mm, such as at least 5 mm, when the temperature difference ΔT=T1-T2 between the first 3 and second 4 glass sheets is substantially 0°C.

T1 is the temperature of the second glass sheet 4, and T2 is the temperature of the first glass sheet 3. The temperature of the glass sheets may be a result of the temperature of the air at and close to the respective major exterior surface SU1, SU2, and/or energy, such as radiation, obtained by means of light such as sunlight.

In some embodiments of the present disclosure, the thickness TH1 of the weather sealant material 8 is between 3 mm and 12 mm, such as between 3 mm and 7 mm, such as between 4 mm and 7 mm including endpoints when the temperature difference ΔT=T1-T2 between the first 3 and second 4 glass sheets is substantially 0°C.

In some embodiments of the present disclosure, the width W1 of the weather sealant material 8 is at least 4 mm, such as at least 7 mm, such as at least 10 mm when the temperature difference ΔT=T1-T2 between the first 3 and second 4 glass sheets is substantially 0°C.

In some embodiments of the present disclosure, the width W1 of the weather sealant material 8 is between 3 mm and 20 mm, such as between 4 mm and 15 mm, such as between 6 mm and 12 mm when the temperature difference ΔT=T1-T2 between the first 3 and second 4 glass sheets is substantially 0°C.

The attachment part 7a may or may not, in some embodiments of the present disclosure, constitute a clamping part 7a which clamps the vacuum insulated glass unit 2 towards the structural window frame 10.

The attachment part 7a may or may not, in some embodiments of the present disclosure, constitute a clamping part 7a which clamps the vacuum insulated glass unit 2 towards the structural window frame 10. In some embodiments, the attachment part 7a may constitute a clamping part 7a which clamps the vacuum insulated glass unit 2 towards the structural window frame 10 when the temperature difference ΔT=T1-T2 between the first and second glass sheets 3, 4 is 40°C or 65°C. In other embodiments, the attachment part 7a may constitute a clamping part 7a which clamps the vacuum insulated glass unit 2 towards the structural window frame 10 already when the temperature difference ΔT=T1-T2 between the first and second glass sheets is substantially 0°C.

A first plane PL1 comprises the first exterior major surface SU1 of the vacuum insulated glass unit when the temperature difference ΔT = T1 - T2 between the first 3 and second 4 glass sheets is substantially 0°C. In some embodiments of the present disclosure, the attachment part 7a may be configured to move towards and/or away from the first plane PL1 when said temperature difference ΔT = T1-T2 between the first 3 and second 4 glass sheets varies, such as when the temperature difference ΔT varies between 0°C to 65°C, such as varies between 0°C to 40°C or between 0°C to 20°C.

The surface of the attachment part 7a which the weather sealant material 8 is attached to, such as adheres to, may be substantially parallel to the first exterior surface SU1 of the vacuum insulated glass unit 2 that the weather sealant material 8 is attached to and preferably also to the plane PL1. This may be at least when the temperature difference ΔT = T1-T2 between the first 3 and second 4 glass sheets is substantially 0°C. In further embodiments, this may also be the case when the temperature difference ΔT = T1-T2 between the first 3 and second 4 glass sheets is between 10 °C and 50 °C, such as between 20 °C and 40 °C.

In some embodiments of the present disclosure, the variation of the temperature difference ΔT between the glass sheets 3, 4 may e.g. occur when the temperature T1 of the glass sheet 4 that comprises a major surface facing and abutting the evacuated gap 5 and a major surface for facing the building interior INT (and e,g. adheres to the lamination interlayer 14a - if present) is varied within the range of 20 °C to 110 °C, such as within the range of 20 °C to 90 °C or within the range of 20 °C to 60 °C. Especially glass units of roof windows may experience high indoor temperatures close to the VIG unit, and these temperatures may even reach above 90 °C, such as above 100 °C if e.g. an interior window blind covers the VIG unit due to sunlight. Additionally or alternatively, this variation of the temperature difference ΔT may e.g. occur when the temperature T1 of the glass sheet 3 that comprises a major surface facing and abutting the evacuated gap 5 and a major surface for facing away from the building interior INT is varied within the range of - 10 °C to 40 °C, such as within the range of 20 °C to 90 °C.

The movement of the attachment part 7a (indicated by arrow AR1) may be caused directly or indirectly by the thermal deflection of the VIG unit 2 which as a result of the thermal edge deflection pushes and/or pulls the attachment part 7a through the weather sealant material 8 so as to move it 7a.

In some embodiments, the attachment part 7a may also provide a certain restriction against the thermal deflection of the VIG unit when compared to a situation where the attachment part 7a was omitted. Additionally or alternatively, In some embodiments of the present disclosure, the weather sealant material 8 may provide a certain restriction against the thermal deflection of the VIG unit when compared to a situation where the attachment part 7a and the weather sealant material was omitted.

It is generally understood that in some embodiments of the present disclosure, the edges of a VIG unit 2 may thermally deflects when the VIG unit is subjected to temperature differences between the glass sheets 3, 4. For example, if the VIG unit glass sheet 4 has a higher temperature T1 than the temperature T2 of the glass sheet 3, the glass sheet 4 expands more than the glass sheet 3, and due to the rigidity of the edge seal 12 such as a solder edge seal, the VIG unit edges deflects and causes a bending curve between the corners of the VIG unit. The VIG unit 2 may after window installation in a building be subjected to shifting thermal edge deflections caused by a varying temperature difference ΔT = T1-T2 between the first and second glass sheet due to the rigid edge seal. It has been approved by both real-life tests and computer simulations that such thermal edge deflections causes a bending curve extending between the VIG unit corners, and that the magnitude of such thermal edge deflection may vary e.g. dependent on VIG unit size and the magnitude (and operational sign) of the temperature difference between the glass sheets. For example, longer VIG unit edges may cause edge deflections of larger magnitude. Examples of thermal edge deflections are e.g. described in patent document WO2020147906.

In one or more embodiments of the present disclosure, the elastic modulus (E-modulus) of the weather sealant material 8 may be below 0.6 MPa, such as below 0.4 MPa, such as below 0.3 MPa. This elastic modulus of the weather sealant material 8 may be an elastic modulus (E-modulus) determined at 100% elongation at 23°C and at a speed of 1 ± 0.2 mm/min.

Said elastic modulus (E-modulus) of the weather sealant material 8 may be determined according to the ASTM D412 standard. ASTM D412 defines Standard Test Methods for e.g. elastomers. It is understood that the ASTM D412 may be the standard as updated in 2021.

It is generally understood that in some embodiments of the present disclosure, the elastic modulus (E-modulus) of the weather sealant material 8 may be higher at 50% elongation at 23°C and at a testing speed of 500 ± 0.2 mm/min, when compared to the elastic modulus of the weather sealant material 8 at 100% elongation at 23°C and at a speed of 1 ± 0.2 mm/min. For example, in some embodiments, the elastic modulus (E-modulus) of the weather sealant material 8 may be at least 1.5 times higher, such as at least 2 times higher, such as at least 5 times higher at 50% elongation at 23°C and at a higher testing speed of 500 ± 0.2 mm/min, when compared to the elastic modulus of the weather sealant material 8 at 100% elongation at 23°C and at a speed of 1 ± 0.2 mm/min..

In some embodiments, the elastic modulus (E-modulus) of the weather sealant material 8 may be above 0.7 MPa, such as above 0.8 MPa, such as above 1 MPa when tested according to standard ASTM D412 at 50% elongation at 23°C and at a higher testing speed of 500 ± 0.2 mm/min.

The inventors realized that conventional tests of some weather sealant, such as some silicone reactive hot-melt sealant material, according to the standard ASTM D412, unless otherwise specified, are provided at a speed of 500 mm/min. The inventors have also realized that thermal edge deflection caused by glass sheet temperature differences during normal window use occur at a significantly lower speed than 500 mm/min. The Inventors have found that some available sealant materials, such as silicone sealant materials, such as a silicone hot-melt sealant material, have the properties of having a significantly lower E-modulus at slow deformation speed when compared to the E-modulus at a higher deformation speed at 500 mm/min. The weather sealant material 8 may hence adapt to shifting temperature difference ΔT = T1-T2 conditions by being reduced in thickness and stretched due to the thermal edge deflection of the VIG unit so as to follow VIG unit movement and maintain water tightness when the temperature difference between the VIG unit glass sheets varies, and may thus help to cause less stress in the VIG unit at lower deformation speeds at which thermal edge deflections occur.

In one or more embodiments of the present disclosure, the elastic modulus (E-modulus) of the weather sealant material 8 may be higher at 100% elongation at 23°C and at a higher testing speed of 500 ± 0.2 mm/min when compared to the elastic modulus of the weather sealant material 8 at 100% elongation at 23°C and at a speed of 1 ± 0.2 mm/min.

In one or more embodiments of the present disclosure, the elastic modulus (E-modulus) of the sealant material (8) is above 0.6 MPa, such as above 0.7 MPa, such as above 1.1 MPa when tested according to standard ASTM D412 at 100% elongation at 23°C and at a higher testing speed of 500 ± 0.2 mm/min.

The VIG unit 5 overlaps an exterior top surface 10ast of the structural frame profile 10a that faces a part of the major exterior surface SU2 of the VIG unit 2. An adhesive 9 may is arranged between the exterior surface SU2 of the vacuum insulated glass unit 2 and the structural window frame 10 at least at some portions, so as to attach the vacuum insulated glass unit to the structural window frame 10.

In one or more embodiments of the present disclosure, said adhesive 9 may be a structural adhesive.

In one or more embodiments of the present disclosure, the weather sealant material may be at least 2 times softer, such as at least 4 times softer, such as at least 5 times softer, than the adhesive 9. This may in some further embodiments of the present disclosure be the case when e.g. testing at 100% elongation at 23°C and at a speed of 1 ± 0.2 mm/min.

In some embodiments of the present disclosure, the resistance against the thermal deflection of the VIG unit edges that is provided by the adhesive 9 may be larger, such as at least 1.5 times larger, such as at least 2 times or 3 times larger, than the resistance against the thermal deflection provided by the weather sealant material 8. In some embodiments, the holding profile may be able to follow/move when the VIG unit edge thermally deflects, thereby further reducing the resistance against the thermal deflection of the VIG unit at the exterior surface SU1 side. It is understood that this is determined at locations along the VIG unit edge where both adhesive 9 and sealant material 8 is present. In some embodiments of the present disclosure, the adhesive may be omitted at corner portions of the VIG unit, whereas the weather sealant material 8 is arranged at the other side of the VIG unit to provide water tightness at the corner portions. In such embodiments, the weather sealant material may provide the primary restriction of the thermal deflection at the VIG unit corner portions.

In one or more embodiments of the present disclosure, the elastic modulus of the weather sealant material 8 and/or the adhesive is the elastic modulus of the sealant material 8 at a material 8, 9 thickness of 4 mm or 6 mm.

The thickness TH2 of the adhesive 9 may in some embodiments of the present disclosure be at least 3 mm, such as at least 4 mm, such as at least 5 mm when the temperature difference ΔT=T1-T2 between the first 3 and second 4 glass sheets is substantially 0°C.

The thickness TH2 of the adhesive 9 may in some embodiments of the present disclosure be between 3 mm and 12 mm, such as between 3 mm and 8 mm, such as between 4 mm and 7 mm including endpoints when the temperature difference ΔT=T1-T2 between the first 3 and second 4 glass sheets is substantially 0°C.

As can be seen in fig 1, the weather sealant material 8 and the structural adhesive 9 may be arranged opposite to each other at each side of the vacuum insulated glass unit 2.

Also, in fig. 1, the weather sealant material 8 and the structural adhesive 9 overlaps the rigid edge seal 12. In some embodiments hereof, at least a part of the rigid edge seal 12, such as at least 20% of the width W2 of the rigid edge seal 12, such as at least 50% of the width W2 of the rigid edge seal 12, such as at least 90% of the width W2 of the rigid edge seal 12, may be arranged between the weather sealant material 8 and the structural adhesive 9.

As can be seen in fig. 1, the holding profile 7 may in embodiments of the present disclosure comprise a tip portion 7b. At least a part 7bs of the tip portion 7b (in fig 1 a surface 7bs part facing the VIG unit surface SU1) is arranged below the level 9tl of the top surface 8ts of the sealant material 8. The top surface of the weather sealant material is the surface that faces the attachment part 7a.

In some embodiments of the present disclosure, a part of the holding profile 7, such as a tip portion 7b of the holding profile, such as a surface part of the tip portion, touches the exterior major surface of the vacuum insulated glass unit.

As illustrated in fig. 1, a part 7bs of the tip portion 7b, such as the surface part 7bs of the tip portion, may in embodiments of the present disclosure, touch the exterior major surface SU1 of the vacuum insulated glass unit 2.

The part of the holding profile touching the VIG unit surface SU1, such as the tip portion 7b, may as illustrated be arranged between the weather sealant material 8 and the area of the exterior surface SU1 of the VIG unit through which sunlight passes to the building interior through the frame opening FO1.

In some embodiments, the part of the holding profile touching the surface, such as the tip portion 7b of the holding profile 7, may be moved by the VIG unit 2 in response to a thermal deflection of the VIG unit. This movement may be provided by means of the part of the surface SU1 of the VIG unit in touch with the tip portion 7b. Additionally or alternatively, this movement of the tip portion 7b may be provided indirectly by the attachment part 7a being moved, thereby also moving the tip portion.

Said movement of the tip portion 7b may in some embodiments be at least 1 mm, such as at least 2 mm, for example at least 3 mm or at least 5 mm, when the temperature difference between the first and second glass sheets is e.g. 40 °C or 65 °C.

It is understood that in some embodiments, the tip portion 7b may not touch the VIG unit surface SU1, for example when the temperature difference ΔT=T1-T2 between the first 3 and second 4 glass sheets is substantially 0°C.

In some embodiments, a part 7bs of the holding profile 7 may touch the exterior major surface of the vacuum insulated glass unit when the temperature difference between the first and second glass sheets is 0 °C. Additionally or alternatively, the part of the holding profile may touch the exterior major surface of the vacuum insulated glass unit when the temperature difference between the first and second glass sheets is 40 °C or 65 °C. This may in some embodiments vary dependent on the direction and/or magnitude of the thermal deflection of the VIG unit.

In some embodiments, a part 7bs of the tip portion, such as a surface part of the tip portion, may touch the exterior major surface of the vacuum insulated glass unit when the temperature difference between the first and second glass sheets is 0 °C. Additionally or alternatively, the surface part 7bs of the tip portion may touch the exterior major surface of the vacuum insulated glass unit when the temperature difference between the first and second glass sheets is 40 °C or 65 °C. This may in some embodiments vary dependent on the direction and/or magnitude of the thermal deflection of the VIG unit.

In some embodiments of the present disclosure, the part of the tip portion 7b, such as a surface part 7bs of the tip portion, may be in touch with the surface of the VIG unit along at least 10%, such as at least 50% or at least 90% of the length of the tip portion 7b (along the longitudinal direction of the holding part 7) when the temperature difference between the first and second glass sheets is 0 °C and/or when the temperature difference between the first and second glass sheets is 40 °C or 65 °C.

As can be seen, the tip portion 7b and the attachment part 7a may ne an integral part of the holding profile

In fig 1, the tip portion 7b is provided by an edge of bended portion of the elongated holding profile 7. As illustrated, the holding profile may in some embodiments extend from the tip portion 7b and beyond the edge of the VIG unit so as to comprise a part 7c which overlaps a part of the fixation frame 20, e.g. in order to obtain a more water tight window.

In other embodiments, however, the tip portion may be provided by a single-walled part of the holding profile 7, The holding profile may e.g. be a bended plate (as illustrated) and/or an extruded profile having a predefined shape for use at the window 1.

A water drainage space 16 may be arranged between the tip portion 7b and the weather sealant material 8 surface which faces the tip portion. This water drainage space 16 may guide dew and/or rain water entering in between the tip portion 7b towards the bottom of the roof window.

The exterior major surface SU1 of the vacuum insulated glass unit 2 which is configured to face away from the interior INT of the building (when the building window 1 is installed in a building) comprises a coating 18. The coating 18 comprises a photocatalytic element. The coating 18 comprising a photocatalytic element photocatalytic is activated by sunlight and enhances cleaning of the glass surface during rain. It is however understood that in other embodiments of the present disclosure, a coating comprising a photocatalytic element may be omitted.

The coating 18 is in fig 1 in contact with the weather sealant material 8. In some embodiments hereof, e.g. if the coating 18 is a multilayer coating, a coating layer of the coating 18, comprising said photocatalytic element may be in contact with the weather sealant material 8.

It is understood that the coating 18 is arranged at the exterior major surface of the glass sheet 3 of the VIG unit which faces away from the evacuated gap, and covers that surface. The coating 18 thus provides the exterior major surface SU1 of the VIG unit.

In some embodiments of the present disclosure, the photocatalytic element, such as a coating layer of the coating 18, comprises a titanium dioxide (*TiO*₂) coating.

An example of a multilayer coating 18 comprising a photocatalytic element may comprise from the glass sheet 3 the following stacked layer structure: *SnO*₂/*SiO*₂/ *SnO*₂/*Sb*/*TiO*₂

It is generally understood that if the coating 18 is a multilayer coating, the coating comprises at least a first coating and a second coating. The first coating layer may in embodiments of the present disclosure be a dew reducing layer, such as a low-E coating, such as comprising (e.g. among others) an indium tin oxide (ITO) coating layer. The second coating may be a coating comprising a photocatalytic element, such as comprising a titanium dioxide (*TiO*₂) coating layer.

The first coating may be placed between the VIG unit 2 surface SU1 and the second coating layer. The first and second coatings of the coating 16 may or may not abut/be adjacent.

It is understood that each of the first and second coatings each may comprise a plurality of coating layers.

In some embodiments, the photocatalytic element may be omitted from the coating 16 and one or more low-e coating layers of the coating 16 may present.

In some embodiments, low-e coatings of the coating 16 may be omitted while a coating comprising the photocatalytic element may be comprised in the coating.

In some embodiments, at least the glass sheet 3 comprising the coating 18 may be a thermally tempered glass sheet.

In fig. 1, the building window 1 is a roof window. A roof window according to the present disclosure may in some embodiments be configured to be installed in a roof structure having a roof pitch below 70°, such as below 60°. A roof window according to the present disclosure may in some embodiments be configured to be installed in a roof structure having a roof pitch between 5° and 70°, such as between 16° and 70°.

A gasket 25 is arranged between the frame profile 10a and a part of the major exterior VIG unit surface SU2 facing the profile 10a. This gasket may provide air and/or water tightness at the interior side of the VIG unit, and may e.g. optionally also provide heat insulating advantages. The gasket may e.g. comprise a polymer gasket such as a rubber gasket. The gasket 25 surface may e.g. have one or more than one contact point with the VIG unit surface in the width direction WDR1 of the frame profile 10a.

The gasket 25 is placed between the frame opening FO1 and the adhesive. Hence in embodiments of the present disclosure where the adhesive 9 is omitted at corner portions of the VIG unit (explained in more details further below), the gasket may be continued at the corner portions of the VI unit, and thereby provide e.g. water tightness, air tightness and/or heat insulating advantages at the corner areas of the VIG unit too.

The gasket 25 strip extends in the longitudinal direction of the longitudinal frame profile 10a, and may meet with another gasket strip 25 at a corner area of the frame near to, such as adjacent to, the frame opening FO1. These gasket strips may e.g. be separate gasket strips or part of the same gasket.

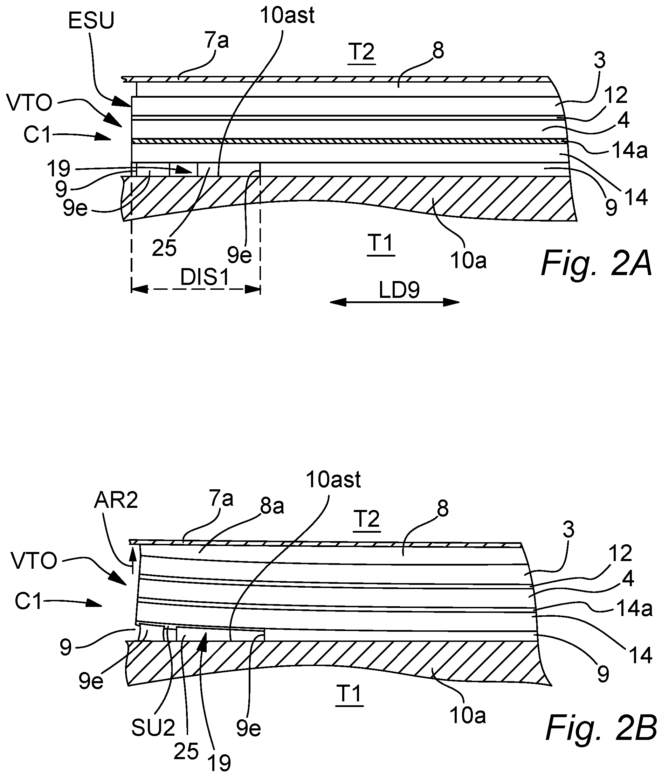

Figs. 2A-2B illustrates schematically a cross section of a corner part of the window 1, according to embodiments of the present disclosure. Here, the adhesive 9 is omitted at a corner portion C1 of the vacuum insulated glass unit 2. In this embodiment by means of the adhesive 9 being terminated at a distance DIS1 from the corner portion C1. This may help to reduce restriction of the thermal deflection of the vacuum insulated glass unit when compared to if the adhesive 9 was continued all the way to a position at the VIG unit 2 cornerC1, such as opposite to a corner portion of the rigid edge seal material 12.

The adhesive 9 is terminated at a distance DIS1 from an outermost edge surface ESU of the Vacuum Insulated Glass unit 2. It is understood that the outermost edge surface ESU has a longitudinal direction which extends substantially perpendicular to a longitudinal direction LD9 of the adhesive 9. The distance DIS1 may in some embodiments be at least 20 mm, such as at least 50 mm, such as at least 100 mm. The distance DIS1 may in some embodiments be between 20 mm and 400 mm, such as between 30 mm and 300 mm, such as between 40 mm and 200 mm.

In one or more embodiments of the present disclosure, the restriction of the thermal deflection of the VIG unit edges, such as by means of the adhesive 9, is reduced at the corner areas of the VIG unit when compared to the restriction of the thermal deflection of the VIG unit edges at center parts of the VIG unit. said center parts of said edges may constitute at least a third, such as half of the extend of the edge between said corners. This reduced restriction may at least partly be obtained due to the omission of the adhesive at the corner areas.

In fig. 2A, the temperature difference ΔT=T1-T2 between the first 3 and second 4 glass sheets is substantially 0°C. Hence, the VIG unit may be substantially straight, and no thermal deflection of the VIG unit edges occur.

In fig. 2B, the temperature difference ΔT=T1-T2 between the first 3 and second 4 glass sheets is non-zero, such as e.g. 40 °C or more, such as 65 °C, and hence, the VIG unit 2 is subjected to thermal deflection. In the illustrated example, the second glass sheet 4 is hotter than the first glass sheet, thus causing the VIG unit corner C1 to move away from the structural frame profile 10a as indicated by arrow AR2 and it can also be seen in fig. 2 that the corner C1 bends upwards. The corner area C1 of the VIG unit is however allowed to move more freely than if the adhesives 9 along each VIG unit edge met at a corner of the VIG unit, because the adhesives 9 each are terminated with the distance from corner C1.

A space 19 is thus provided between the VIG unit surface SU2 facing the frame profile 10a and the exterior top surface 10ast of the structural frame profile 10a that faces a part of the major exterior surface SU2 of the VIG unit 2. An end surface 9e of the adhesive 9 faces a part of the space 19.

The space 19 may in embodiments of the present disclosure be arranged between and/or arranged adjacent to:
- the end surfaces 9e of the adhesive strips 9e,
- a part of the major surface SU2 of the VIG unit 2 that faces the frame profile 10a, and
- a part of the exterior top surface 10ast of the structural frame profile 10a that faces the VIG unit 2.

The gasket 25 may abuts the VIG unit surface SU2 at positions next to the space 19, and e.g. prevent or reduce air-flow between the space 19 and the frame opening (see FO1 of fig. 2B).

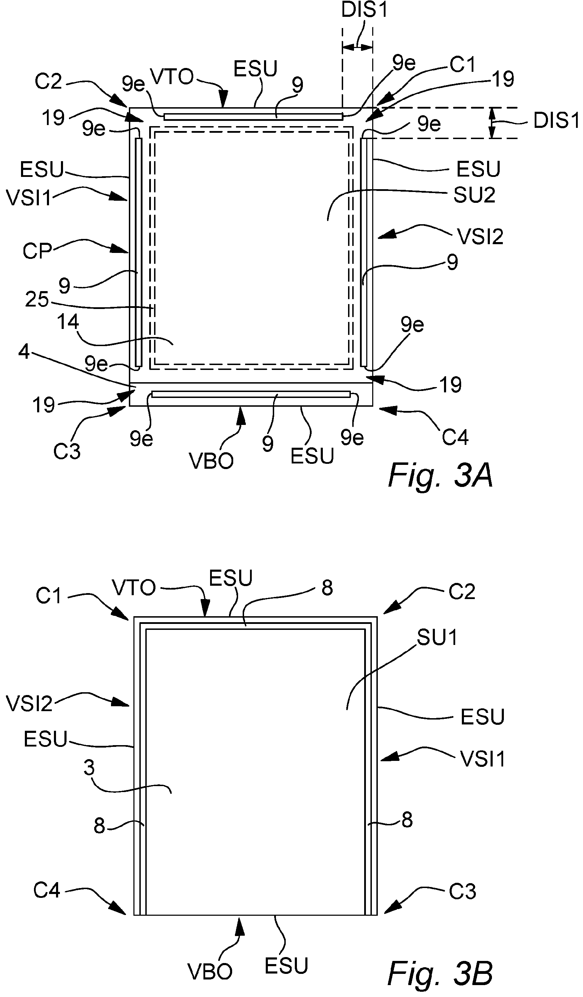

As can be seen in fig. 2B, the VIG unit may stretch some of the adhesive 9 material near the end surface 9e of the adhesive strip, and the adhesive 9 may thus cause a restriction against the thermal deflection occurring at and near the corner portion. However, the corner parts C1 of the VIG arranged opposite the space 19 are allowed to more freely bend when the thermal deflection occurs. At center parts CP (See fig. 3A-3B) of the VIG unit edge, e.g. substantially midways between two corners of the VIG unit, the VIG unit may to some extend compress and deform the adhesive 9, but this may depend on if the hardness of the adhesive and e.g. also if an adhesive 9 is present at this location.

If the opposite temperature difference ΔT=T1-T2 occurs than the one illustrated in fig. 3A-3B, i.e. with a different operational sign of the temperature difference caused by the first glass sheet 3 being hotter than the second glass sheet 4 (e.g. causing a temperature difference ΔT=T1-T2 of e.g. -30 °C or more, such as -45 °), the adhesive 9 material near the end surface 9e of the adhesive strip 9 may instead be compressed by the VIG unit corner area, but the corner parts C1 of the VIG arranged opposite the space 19 may here also be allowed to more freely bend when the thermal deflection of the VIG unit edges occurs.

It is understood that in some embodiments, a softer material (not illustrated) than the adhesive 9 may be provided in the space 19, or the space 19 may as illustrated remain unfilled and be an air space.

Figs. 3A-3B illustrates schematically a VIG unit for installation at the frame, but the frame is not illustrated so as to improve understanding. Fig. 3A is a view towards the major exterior surface SU2 of the VIG unit for facing the building interior, whereas fig. 3B is a view towards the major exterior surface SU1 for facing away from the building interior.

In fig. 3A, a VIG unit is illustrated with a lamination glass that has a smaller surface area than the second glass sheet 4 of the VIG unit. This may help to e.g. reduce costs, reduce the final *CO*₂ footprint of the VIG unit and/or help to enable a more pace saving solution. In other embodiments however (not illustrated), the lamination glass sheet 14 may extend all the way to the bottom VBO edge of the VIG unit and/or have substantially the same surface area size (of the major surface) as the adjacent VIG unit glass sheet 4. This may in some embodiments be provided at one or more sides VTO, VBO, VSI1, VSI2 of the VIG unit.

Additionally or alternatively, the first glass sheet 3 may extend beyond the glass sheet edge of the second glass sheet 4, and hence comprise a projecting glass sheet portion. This may in some embodiments be provided at one or more sides VTO, VBO, VSI1, VSI2 of the VIG unit. This may e.g. reduce CO*₂* footprint, reduce costs and/or provide a space saving solution.

As can be seen in fig. 3A, the adhesive 9 may comprise different adhesive strips extending in a longitudinal direction that may be substantially parallel to the longitudinal direction of the edge surface ESU of the respective side VTO, VBO, VSI1, VSI2 of the VIG unit.

In fig. 3A, an adhesive strip is arranged along all sides VTO, VBO, VSI1, VSI2 of the VIG unit, but in other embodiments, the adhesive may be omitted at some sides, and e.g. just be placed along two or three sides of the VIG unit, while being e.g. omitted or reduced along other sides. For example, the adhesive 9 adjacent to and extending along the top VTO and/or bottom VBO may be omitted in some embodiments.

It may be preferred that the adhesive strips 9 may be single continuous strips that extends along the respective side VTO, VBO, VSI1, VSI2 and are terminated at the oppositely directed adhesive end surfaces 9e that face the space 19. In other embodiments however (not illustrated), the adhesive 9 may comprise two or more discrete adhesive strips extending in continuation of each other along a VIG unit 2 side VTO, VBO, VSI1, VSI2.

The dashed rectangles indicate a potential location of the gasket 25 (see fig. 1) when the VIG unit is arranged at the frame 10, and it can be seen that the gasket may provide tightness at the corner areas of the VIG unit where the adhesive 9 is omitted and the space 19 will/may be present.

In fig. 3A, the adhesive 9 is omitted at all four corner C1, C2, C3, C4 portions, but it is understood that the adhesive in some embodiments may be omitted at less than all four corner portions, e.g. so that the adhesive is omitted at three or less, such as at two, corner portions. This may be obtained by means of the adhesive 9 being terminated at a distance DIS1 from the respective corner portion and edge, and hence comprises an end surface 9e facing towards the space 19.

In one or more embodiments of the present disclosure, the strip of the adhesive 9 may have a length corresponding to at least 30%, such as at least 60%, such as at least 80% of the length of an edge/side VTO, VBO, VSI1, VSI2 of the VIG unit that has a longitudinal direction which is substantially parallel to the longitudinal direction of that strip of adhesive and which is proximate to the adhesive strip.

In one or more embodiments of the present disclosure, the strip of the adhesive may have a length that is less than 97%, such as less than 93%, such as less than 88% of the length of an edge of the VIG unit that has a longitudinal direction which is substantially parallel to the longitudinal direction of that strip of adhesive and which is proximate to the adhesive strip.

In one or more embodiments of the present disclosure, the strip of the adhesive may have a length corresponding to between least 30% and 97%, such as between 50% and 93%, such as between 60% and 88% of the length of an edge of the VIG unit that has a longitudinal direction which is substantially parallel to the longitudinal direction of that strip of adhesive and which is proximate to the adhesive strip.

Fig. 3B illustrates that the weather sealant material 8 may extend as a continuous strip along at least three sides of the VIG unit, In fig. 3BB, the weather sealant material extends along the VIG side extending between corners C4-C1, along the VIG top side extending between corners, C1-C2, and along the VIG side extending between corners, C2-C3. This provides a U-shaped sealant material. As can be seen, the sealant material strips meet at the corner areas of corners C1 and C2 at the top of the VIG, and also provided weather, such as water, tightness at these areas. The weather sealant material 8 thus extend continuously and substantially parallel to the edges of the vacuum insulated glass unit between corners C1-C4 of the vacuum insulated glass unit, and the strips of the weather sealant material meet 8 at a weather seal corner.

It is generally understood that the weather sealant material 8 is configured to provide water tightening so as to prevent or reduce water entering in between the attachment part 7a (see e.g. figs 1-2B and fig. 5) and the weather sealant material 8, and in between the VIG unit 2 and the weather sealant material 8. The weather sealant material may in some embodiments be arranged along and parallel to the sides and/or top of the roof window. The weather sealant material may or may not be arranged along and parallel to bottom of the roof window.

The weather sealant material 8 is in fig. 3B arranged along and parallel to the edges ad the VIG unit sides VSI1, VSI2 and along the VIG unit top edge VTO. The weather sealant material 8 is however not arranged along and parallel to the bottom edge VBO. This is because the example illustrated in fig. 3B is a VIG unit for a window such as a roof window where a relatively large overlap over the frame 10 and possibly also 20 may be provided at the window bottom. In some embodiments, an extension (not illustrated) and/or a window cladding (not illustrated) may be provided. This may provide that weather sealant 8 at the bottom may be less important and/or may differ in type from the of the weather sealant 8. This provides that the water may be guided directly from the glass unit surface SU1 and towards the roof, building façade, sole bench, a water drainage or water guidance next to the window and/or the like. This water guidance may or may not, in some embodiments, be provided over a cladding and/or a pane extension.

It is generally understood that in some embodiments of the present disclosure, the length of each of at least two of the edges of the VIG unit 2, such as the length of all four of the edges of the VIG unit, may each be at least 80 cm, such as at least one meter, such as at least 1.2 or at least 1.5 meter.

It is generally understood that in some embodiments of the present disclosure, the surface area of a major surface SU1, SU2 of the VIG unit is at least 0.8 *m*², such as at least 1 *m*², such as at least 1.5 *m*².

The VIG unit is rectangular and may in some embodiments comprise two parallel longer edges that are longer than (and perpendicular to) two parallel, shorter edges, of the VIG unit.

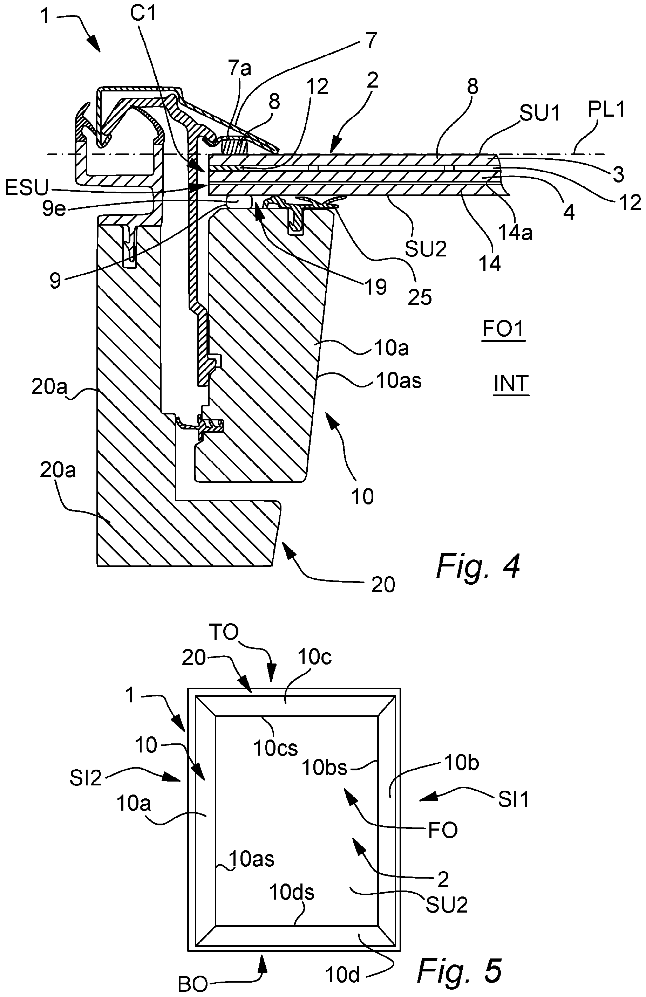

Fig. 4 illustrates schematically a cross section of a corner part of a roof window, according to embodiments of the present disclosure. The adhesive 9 is here omitted at the corner area of the VIG unit in order to provide less restriction of thermal deflection of the VIG unit edges at the corner area of the VIG unit. This is illustrated by that the adhesive 9 is not hatched, and the cross section is provided in a direction transverse to the longitudinal direction of the frame profile 10a so that the view is towards the end surface 9e of the adhesive.

In one or more embodiments of the present disclosure, one or more of the adhesive 9, the weather sealant material 8 and/or the elongated holding profile(s) 7 may provide a resistance against the thermal edge deflection of the VIG unit. In some embodiments hereof, the resistance against thermal deflection of at least two opposing edges of the vacuum insulated glass unit 1 may be lower, such as substantially lower, such as at least 20% lower or at least 50% lower at corner parts of the edges/VIG unit than at center parts (See CP of fig. 3A) of the VIG edges.

In certain embodiments, the adhesive 9, the weather sealant material 8 and/or the elongated holding profiles 7 provides a VIG unit fixation system for fixating the VIG unit at the window frame.

In some embodiments of the present disclosure, the resistance against thermal deflection of at least two opposing edges of said vacuum insulated glass unit 2 may be substantially lower at corner parts of the edges than at center parts of the edges, whereby the ratio between the compression force on the fixation system and the thermal deflection at positions at the corner parts is less than half of the corresponding ratio at the center part of an edge, Said center parts CP of said at least two opposing, parallel edges may in some embodiments constitute at least a third, such as half of the extent of the edge between said corners.

The weather seal material 8 is configured to provide water tightness at corner portions/areas (see e.g. C1, C2, C3, C4) of the Vacuum insulated glass unit. See e.g. fig. 4 and 3B.

The weather sealant material 8 overlaps surface parts of the glass sheet 3 at one or more corner portions C1, C2, C3, C4 so as to provide water tightness at the area of the corner portion(s) C1, C2, C3, C4.

The weather seal material 8 is configured to provide water tightness along the VIG unit edges and also provide water tightening at corner portions of the Vacuum insulated glass unit.

In fig. 4, the weather sealant material 8 comprises a seal material portion which overlaps a portion, such as a space 19, such as an unfilled space, which is located between the window frame 10 and the vacuum insulated glass unit 2. The overlapped portion 19 is in fig. 4 located opposite to one an end surface 19e of the adhesive 9.

Fig. 5 illustrates schematically a building window 1, such as a roof window, according to embodiments of the present disclosure. As can be seen, the movable frame 10 comprises four structural, elongated profiles 10a-10d. The first and second profiles 10a, 10b are side profiles that are parallel, and the third and fourth profiles 10c, 10b are top and bottom profiles, respectively. The profiles 10a-10d encloses a rectangular frame opening FO1 arranged between and abutting the surfaces 10as- 10bs, 10cs, 10ds of the profiles that faces the frame opening. See also frame opening FO1 in fig. 1.

The frame 10 may comprise elongated holding profiles 7 comprising an attachment part 7a as described above (not illustrated in fig. 5) which overlaps the first exterior surface SU1 of the vacuum insulated glass unit at least at the sides SI1, SI2 and preferably also at the top TO of the window 1. Hence, an elongated holding profile 7 may be attached to each of the profiles 10a and 10b, and a holding profile 7 may possibly also be attached to the top frame profile 10c. This attachment may in some embodiments be provided through/by means of a reinforcement profile 11 as described above. In some embodiments, however, an elongated holding profile 7 may be omitted at the window 1 bottom BO, and the VIG unit may overlap e.g. also a fixation frame 20 profile at the window bottom BO to guide water.

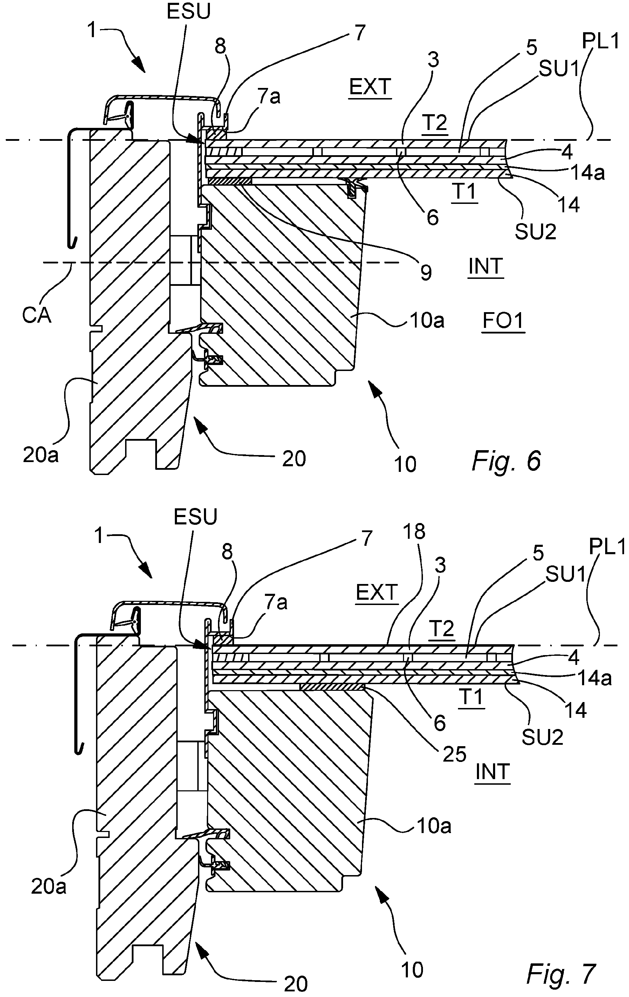

Fig. 6 illustrates schematically a cross section of a side part of a roof window according to embodiments of the present disclosure, wherein the roof window is of the center-hung type. A hinge 30 connection is hence arranged between the fixation frame 20 and the movable frame 10, and allows the movable frame 10 with the VIG unit to pivot around a substantially horizontal center axis CA which is arranged between the top and bottom of the roof window 1 when the roof window is installed in a building roof structure. The hinge allows the movable frame 10 to move through the frame opening of the fixation frame, and/or allows the surface SU1 to face inwards towards the building interior INT in a cleaning mode, to enable the surface SU1 to be cleaned from inside of the building.

In one or more embodiments of the present disclosure, the building window is a roof window of the of the non-center-hung type. A roof window of such a type is illustrated in figs. 1 and 4.

In one or more embodiments of the present disclosure, the building window 1 may be a roof window of both the top hung type and center-hung type. A roof window of such a type may e.g. be a window as illustrated in fig. 4. In such a window, however, the hinge 30 may be part of or connected to an arm or intermediate frame extending from the roof window top. A first hinge (not illustrated) hence allows the movable frame, together with the arm or intermediate frame, to be top hung in a top hung window configuration, whereas the center hinge(s) 30 may be used for rotating the movable frame 10, e.g. during surface SU1 cleaning so that the major exterior surface faces inwards towards the building interior.

In fig. 6, the holding profile 7 does not comprise a part of a tip portion that is arranged below the level of the top surface of the sealant material, see fig. 1. It is however understood that in other embodiments, the holding profile 7 may comprise a part, such as a part of the tip portion that is arranged below the level of the top surface of the sealant material, as e.g. described above in relation to fig. 1.

Fig. 7 illustrates an embodiment of the present disclosure, wherein an adhesive is omitted at the interior side of the building window 1 between the structural frame profile 9 and the VIG unit 2. The adhesive 9 may be omitted at one, more than one, or all of the structural frame profiles of the frame 10. The VIG unit 2 is clamped towards a gasket 25 and the structural profile 10a by means of the holding profile 7 and the weather sealant 8. The exterior surface SU1 of the VIG unit 2 comprises a coating 18 as e.g. described according to various embodiments of the present disclosure. The weather sealant material 8 may e.g. be a weather sealant material as e.g. described according to various embodiments above. In other embodiments, the holding profile 7 may e.g. be a profile as previously disclosed, for example comprising a tip portion 7b, as previously. In figs. 5 and 6, the holding profile comprises a reinforcement portion that connects the holding profile to the structural frame profile 10a. In other embodiments, the holding profile 7 may be connected directly or indirectly to a reinforcement profile (see reference 11 of fig. 1) such as by means of a mechanical fastening arrangement (see e.g. ref. 17 of fig. 1).

## Claims

1. A building window (1), such as a roof window, comprising:
- a structural window frame (10) comprising elongated structural frame profiles (10a-10d),
- a vacuum insulated glass (VIG) unit (2) comprising a first glass sheet (3) and a second glass sheet (4), wherein the vacuum insulated glass unit (2) comprises an evacuated gap (5) arranged between a major surface (3a) of the first glass sheet (3) and a major surface (4a) of the second glass sheet (4), wherein a plurality of support structures (6) are arranged in the evacuated gap (5) and wherein an edge seal (12) encloses the evacuated gap (5),
wherein the vacuum insulated glass unit (2) is attached (7, 8, 9) to the structural window frame (10),
wherein the window frame (10) comprises one or more elongated holding profiles (7) comprising an attachment part (7a) which overlaps a first exterior major surface (SU1) of the vacuum insulated glass unit (2),
wherein a weather sealant material (8) is attached to the attachment part (7a) and said first exterior major surface (SU1) of the vacuum insulated glass unit (2), wherein the first exterior major surface (SU1) is configured to face away from the interior (INT) of the building when the building window (1) is installed in a building, wherein the weather sealant material (8) is a water tightening weather seal,
wherein the weather sealant material (8) is a silicone reactive hot-melt sealant material, and wherein the first exterior major surface (SU1) comprises a coating (18), which coating comprises a photocatalytic element.

2. The building window (1) according to claim 1, wherein the coating (18) is in contact with the weather sealant material (8).

3. The building window (1) according to claim 1 or 2, wherein a coating layer of the coating (18) comprises said photocatalytic element, wherein said coating layer comprising said photocatalytic element is in contact with the weather sealant material (8).

4. The building window (1) according to any of the preceding claims, wherein said coating (18), such as said coating layer comprising the photocatalytic element, comprises a titanium dioxide (*TiO*₂) coating.

5. The building window (1) according to any of the preceding claims, wherein said coating (18) is a multilayer coating comprising at least a first coating and a second coating,
wherein the first coating comprises a low-E coating layer, such as comprising an indium tin oxide (ITO) coating,
wherein the second coating is a coating comprising a photocatalytic element, such as a titanium dioxide (*TiO*₂) coating,
such as wherein the first coating is placed between the VIG unit (2) glass sheet surface and the second coating.

6. The building window (1) according to any of the preceding claims, wherein the elastic modulus (E-modulus) of the weather sealant material (8) is below 0.6 MPa, such as below 0.4 MPa, such as below 0.3 MPa, which elastic modulus of the weather sealant material (8) is an elastic modulus (E-modulus) determined at 100% elongation at 23°C and at a speed of 1 ± 0.2 mm/min.

7. The building window (1) according to claim 6, wherein the elastic modulus (E-modulus) of the weather sealant material (8) is higher, such as at least 1.5 times higher, such as at least 2 times higher, such as at least 5 times % higher at 50% elongation at 23°C and at a higher testing speed of 500 ± 0.2 mm/min.

8. The building window (1) according to claim 6 or 7, wherein the elastic modulus (E-modulus) of the weather sealant material (8) is above 0.7 MPa, such as above 0.8 MPa, such as above 1 MPa when tested according to standard ASTM D412 at 50% elongation at 23°C and at a higher testing speed of 500 ± 0.2 mm/min.

9. A building window (1) according to any of the preceding claims, wherein the thickness (TH1) of the weather sealant material (8) is at least 3 mm, such as at least 4 mm, such as at least 5 mm, when the temperature difference ΔT between the first (3) and second (4) glass sheets is substantially 0°C
and/or
wherein the thickness (TH1) of the weather sealant material is between 3 mm and 12 mm, such as between 3 mm and 7 mm, such as between 4 mm and 7 mm including endpoints when the temperature difference ΔT between the first (3) and second (4) glass sheets is substantially 0°C.

10. The building window (1) according to any of the preceding claims, wherein an adhesive (9) is arranged between a second exterior surface (SU2) of the vacuum insulated glass unit (2) and the structural window frame (10) so as to attach the vacuum insulated glass unit to the structural window frame (10),
wherein said first and second surfaces (SU1, SU2) faces away from each other.

11. The building window (1) according to claim 10, wherein the weather sealant material (8) and the structural adhesive (9) are arranged opposite to each other at each side of the vacuum insulated glass unit (2).

12. The building window (1) according to claim 10 or 11, wherein said adhesive (9) is omitted at one or more corner portions (C1, C2, C3, C4), such as at two or more corner portions, such as at all corner portions (C1, C2, C3, C4), of the vacuum insulated glass unit (2), such as by means of the adhesive (9) being terminated at a distance (DIS1) from the respective corner portion,
and/or
wherein said adhesive (9) is terminated at a distance (DIS1) from an outermost edge surface (ESU) of the vacuum insulated glass unit (2), wherein said outermost edge surface (ESU) has a longitudinal direction which extends substantially perpendicular to a longitudinal direction (LD9) of the adhesive (9), such as wherein said distance (DIS1) is at least 20 mm, such as at least 50 mm, such as at least 100 mm.

13. The building window (1) according to any of the preceding claims, wherein said weather sealant material (8) is configured to provide water tightness at corner portions (C1, C2, C3, C4) of the vacuum insulated glass unit.

14. The building window (1) according to any of the preceding claims, wherein the attachment part (7a) comprises, such as constitutes, a clamping part (7a) which clamps the vacuum insulated glass unit (2) towards the structural window frame (10).

15. A building window (1) according to any of the preceding claims, wherein the surface of the attachment part (7a) which the weather sealant material (8) is attached to is substantially parallel to the first exterior surface (SU1) of the vacuum insulated glass unit that the weather sealant material (8) is attached to.
